Europäisches Patentamt

European Patent Office

Office européen des brevets

(11) Veröffentlichungsnummer: **0 256 048 B1**

(12) **EUROPÄISCHE PATENTSCHRIFT**

(45) Veröffentlichungstag der Patentschrift: **07.10.92**

(21) Anmeldenummer: **87900792.0**

(22) Anmeldetag: **30.01.87**

(86) Internationale Anmeldenummer:
**PCT/CH87/00012**

(87) Internationale Veröffentlichungsnummer:
**WO 87/04815 (13.08.87 87/18)**

Teilanmeldung 92103852.7 eingereicht am
30/01/87.

(51) Int. Cl.⁵: **G05D 23/19**, F24C 15/10

(54) **VERFAHREN ZUM STELLEN DER HEIZLEISTUNG AN EINEM WECHSELSTROMBETRIEBENEN KOCHHERD-HEIZELEMENT UND STEUERUNG FüR DIE HEIZLEISTUNG EINES DERARTIGEN HEIZELEMENTES.**

(30) Priorität: **31.01.86 CH 387/86**

(43) Veröffentlichungstag der Anmeldung:
**24.02.88 Patentblatt 88/08**

(45) Bekanntmachung des Hinweises auf die
Patenterteilung:
**07.10.92 Patentblatt 92/41**

(84) Benannte Vertragsstaaten:
**AT BE CH DE FR GB IT LI LU NL SE**

(56) Entgegenhaltungen:
**DE-A- 2 900 627      DE-A- 2 920 189
DE-A- 3 123 523      GB-A- 2 120 471
US-A- 3 221 141      US-A- 3 423 598**

(73) Patentinhaber: **Electrolux AG
Badenerstrasse 587
CH-8048 Zürich(CH)**

(72) Erfinder: **KELLER, Edwin
Halden 24
CH-8604 Volketswil(CH)**
Erfinder: **TISCHHAUSER, Hans
Antonigasse 20
CH-5620 Bremgarten(CH)**

(74) Vertreter: **Troesch, Jacques J., Dr. sc. nat. et
al
Troesch Scheidegger Werner AG Siewerdtstrasse 95
CH-8050 Zürich(CH)**

EP 0 256 048 B1

**Beschreibung**

Die vorliegende Erfindung betrifft ein Verfahren zum Stellen der Heizleistung an einem wechselstrombetriebenen Heizelement eines Kochherdes nach dem Oberbegriff von Anspruch 1 sowie eine Steuerung für die Heizleistung eines solchen Heizelementes nach dem Oberbegriff von Anspruch 16.

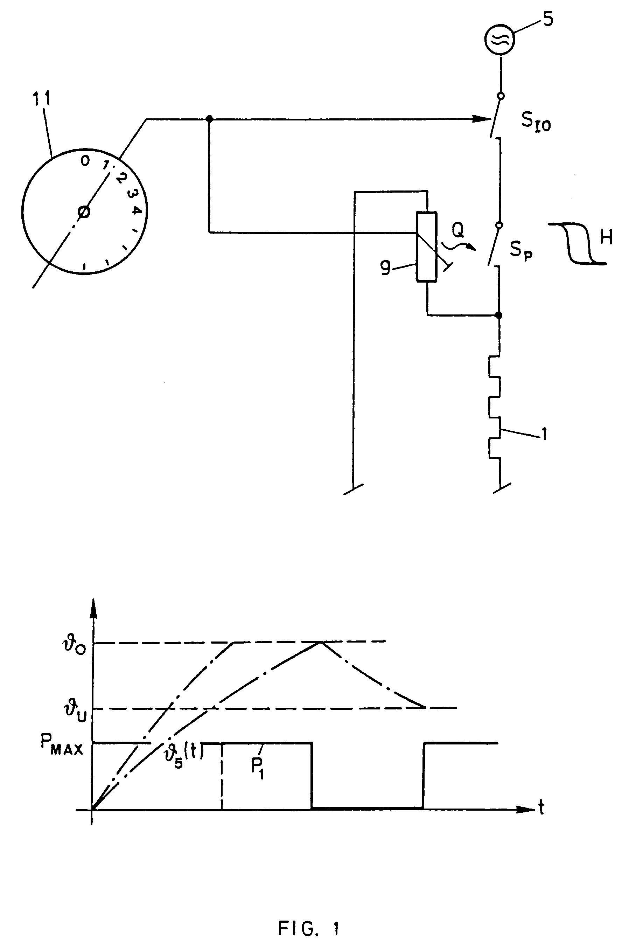

In Fig. 1 ist prinzipiell dargestellt, wie die Heizleistung an einem Kochherd-Heizelement gesteuert wird. Ueber ein Vorgabeelement, einen Drehknopf 11 mit zehn Einstellstufen, wird ein EIN/AUS-Schalter $S_{IO}$ zwischen dem Netz 5 und einem Heizelement 1 des Kochherdes geschlossen. In Serie zwischen Netz und Heizelement liegt ein Leistungssteuerschalter $S_P$, wie ein Bimetallschalter mit Hysterese H, der thermisch, wie bei Q angedeutet, mit einem Beheizungselement 9 gekoppelt ist, beispielsweise einem Widerstand, der parallel zum Heizelement 1 liegt. Es wird entsprechend den am Knopf 11 eingeschalteten Stufen die Ansprechzeit des Schalters $S_P$ eingestellt.

Der Schalter $S_P$ ist vorerst geschlossen. Wird nun der Schalter $S_{IO}$ eingeschaltet, so wird das Heizelement 1 mit voller Leistung $P_{MAX}$ beaufschlagt. Die Temperatur am Beheizungselement 9 $\vartheta_9$ steigt, bis sie den oberen Schwellwert $\vartheta_O$, entsprechend der Hysterese H erreicht. Daraufhin wird der Schalter $S_P$ geöffnet und die Leistung am Heizelement 1 abgeschaltet. Nun fällt die Temperatur $\vartheta_9$ des Beheizungselementes 9 wiederum ab. Erreicht sie den unteren Schwellwert $\vartheta_U$, so wird durch Schliessen des Schalters $S_P$ wiederum volle Leistung auf das Heizelement 1 geschaltet. Durch die Stufenschaltung des Knopfes 11 wird nun beispielsweise der Widerstandswert des Beheizungselementes 9 geändert. Wird er verkleinert, so erhöht sich seine Heizleistung, der Schalter $S_P$ springt rascher an und unterbricht die Leistungszufuhr an das Heizelement 1, wodurch bei in etwa gleichbleibendem Abkühlverhalten des Beheizungselementes 9, die Zeitspanne, während welcher die volle Leistung $P_{MAX}$ dem Heizelement 1 aufgeschaltet ist, verkürzt wird. Auf diese Art und Weise kann das Verhältnis der Zeiten, während welchen dem Heizelement 1 volle Leistung aufgeschaltet ist, bzw. keine Leistung aufgeschaltet ist, verändert werden. Dieses Vorgehen ist in verschiedener Hinsicht nachteilig:

Exemplarstreuungen, Einfluss der Umgebungstemperatur und Alterung der Elemente ergeben eine nur äusserst ungenaue Leistungsabstufung der über die Zeit gemittelten, dem Heizelement 1 aufgeschalteten Leistung. Im weiteren führt das Auf- und Abschalten der vollen Leistung, ohne Entstörung, zu relativ starken Netzstörungen, und eine Einstellung kleiner Leistungen ist problematisch. In Zeitabschnitten, in welchen dem Heizelement 1 volle Leistung aufgeschaltet wird, ergibt sich ein starkes Temperaturgefälle zwischen Heizelement 1, Kochgeschirr und Kochgut, entlang der Vertikalachse zum Kochgeschirr, womit die unterste Schicht des Kochgutes anbrennen kann, während die oberen noch kaum warm sind.

Aus der GB-A-2 120 471 ist es nun bekannt, die Heizleistung an einem wechselstrombetriebenen Heizelement eines Kochherdes mittels eines in Stufen stellbaren Einstellorganes zu stellen. Ausgehend von voll aufgeschalteter Leistung - der Wechselstrom wird ununterbrochen dem Heizelement aufgeschaltet - wird, in einer nächst tieferen Stufe, abwechselnd eine Wechselstromperiode aufgeschaltet und eine Wechselstromperiode vom Heizelement abgetrennt. Bei einer weiteren Reduktionsstufe wird dann jeweils eine Wechselstromperiode dem Heizelement aufgeschaltet, zwei folgende Wechselstromperioden vom Heizelement abgetrennt etc.

Dadurch wird mithin das Verhältnis zwischen einer ersten Zeitspanne, während welcher der Wechselstrom vom Heizelement abgetrennt ist, zu einer zweiten, anschliessenden Zeitspanne, während welcher eine ganze Anzahl Wechselstromhalbwellen, entsprechend Perioden, dem Heizelement zugeschaltet werden, verändert.

Variiert wird dabei die Länge der ersterwähnten Zeitspanne, nämlich derjenigen, während welcher die Wechselstromhalbwellen vom Heizelement abgetrennt sind, während die zweite Zeitspanne, nämlich diejenige, während welcher eine ganze Anzahl Wechselstromhalbwellen dem Heizelement aufgeschaltet werden, konstant bleibt.

Dieses bekannte Vorgehen hat den Nachteil, dass beim Uebergang von der Stufe "Voll-Leistung", bei welcher der Wechselstrom dem Heizelement voll aufgeschaltet ist, zur ersten Reduktionsstufe, bei welcher abwechselnd eine Wechselstromperiode aufgeschaltet und eine Wechselstromperiode abgetrennt wird, eine Abstufung von 100% Leistung direkt auf 60% Leistung erfolgt.

Aus der DE-OS-31 23 523 ist es bekannt, die Leistung, beispielsweise an einem Heizgerät, zu regeln, ohne dass im Stromnetz störende Belastungsspitzen auftreten. Das Heizelement wird dabei in mehrere Elemente unterteilt, wobei die Ein- und Ausschaltung der Elemente voneinander getrennt erfolgt und eine feinstufige Regelung für das Heizgerät gegeben ist. Die feinstufige Regelung erfolgt durch Erzeugen eines Sägezahn-Bezugsignals mit einer Sägezahn-Impulslänge entsprechend einer Anzahl Wechselstromperioden.

Aus einem Temperatur-IST-Wert, in ein Spannungssignal gewandelt, wird durch Vergleich mit dem Sägezahnsignal eine einer Regeldifferenz entsprechende Zeitspanne eruiert, während welcher vom Heizelement, entsprechend der erwähnten Regeldifferenz, Leistung abgeschaltet wird. Ist die Regeldifferenz Null, so ist die volle Leistung aufgeschaltet, übersteigt der IST-Wert den SOLL-Wert, wird sukzessive in Halbwelleninkrementen die Leistung vom Heizelement abgetrennt.

Die vorliegende Erfindung geht von einem Verfahren bzw. einer Steuerung für die Heizleistung eines derartig betriebenen Heizelementes eingangs genannter Gattung gemäss der GB-A-2 120 471 aus und stellt sich zur Aufgabe, das Verfahren bzw. die Steuerung derart weiterzubilden, dass eine feinere Leistungsabstufung vorgenommen werden kann.

Dies wird durch Ausbildung des erwähnten Verfahrens nach dem kennzeichnenden Teil von Anspruch 1, der Steuerung nach dem kennzeichnenden Teil von Anspruch 16 erreicht.

Es werden mithin an einem elektrischen Wechselsignal zum Erbringen der Heizleistung Wechselsignalpakete erzeugt und deren Tastverhältnis angesteuert. Es werden nach Massgabe der Einstellung am Vorgabeelement Wechselstrompakete auf das Heizelement aufgeschaltet, mit variabler Anzahl Halbwellen. Die Breite dieser Pakete, bezogen auf die Zwischenzeitspanne zwischen den Paketen, bestimmt die praktisch kontinuierlich einstellbare Heizleistung.

Es wird somit dem Heizelement durch Schliessen seines Stromkreises auf das Netz eine Anzahl Netzhalbwellen aufgeschaltet, dann wird das Heizelement vom Netz abgetrennt, wobei die Leistungsverstellung durch Verstellung des Verhältnisses zwischen Zeiten, an welchen das Heizelement vom Netz abgetrennt ist, und Zeiten, an welchen das Netz dem Heizelement aufgeschaltet ist, erfolgt.

Dadurch, dass man das Einstellorgan manuell und/oder nach einem Zeit-Steuerprogramm stellt, wird ermöglicht, einen Kochvorgang zu planen und die Zeit einzugeben, wann damit begonnen werden soll.

Bei einer weiteren Ausführungsvariante des Verfahrens wird vorgeschlagen, dass man die Heizleistung nach einem Programm in der Zeit kontinuierlich oder in Stufen stellt, wie nach Massgabe von kochgutspezifischen Programmen. Damit wird ermöglicht, dass man die Funktion der dem Heizelement zugeführten Leistung in der Zeit erst vorgibt und nach Beginn des Kochvorganges das Heizelement auch nach dieser Funktion steuert.

Insbesondere wird damit die Möglichkeit eröffnet, im Sinne einer Anstossautomatik bzw. einer Ankochautomatik,bei Aufschalten der Heizleistung bei Beginn eines Kochvorganges eine Ueberleistung vorzugeben, um eine erwünschte Heizelement-Temperatur möglichst rasch zu erreichen.

Dabei kann die Programmeingabe mittels manueller Codeeingabe und/oder mittels Einlesen von Datenträgern an Ort oder mittels einer drahtlosen Uebermittlung vorgenommen werden.

Bei einer weiteren Ausführungsvariante, bei der man bei einem spezifischen Kochvorgang das Einstellorgan manuell über der Zeit verschieden einstellt, wird ein als optimal befundener Leistungs/Zeitablauf abspeichert, z.B. auf einer Magnetkarte, zur nachmaligen Wiederbenutzung.

Dadurch, dass man im weiteren mindestens zwei Heizelemente in gegenseitiger Abhängigkeit ansteuert, wird erreicht, dass bespeisweise zwei Kochplatten für ein grosses Kochgeschirr synchron angesteuert werden können, oder dass bei Vorliegen verschiedener Kochgüter in verschiedenen Kochgeschirren die zeitliche und leistungsmässige Ansteuerung der zugeordneten Heizelemente so erfolgen kann, dass die Kochgüter beide zu abgestimmten Zeiten fertiggestellt sind, wie beispielsweise für gleichzeitiges Anrichten.

Dies ergibt auch die Möglichkeit, dass man bei Steuerung der Heizleistung an mehr als einem Heizelement die Steuerung selbsttätig unter Vermeidung von netzseitigen Leistungsspitzen vornimmt.

Dies kann dadurch erfolgen, dass die vom Netz aufgenommene Leistung überwacht wird und beispielsweise die vorgenannten Pakete für mehrere Heizelemente gestaffelt den zugeordneten Elementen aufgeschaltet werden.

In Anbetracht der Tatsache, dass unterschiedliche Kochgeschirre und unterschiedliche Kochgüter auch unterschiedliche Wärmeleitungen und Wärmeabsorptionseigenschaften aufweisen, kann mit der gleichen gestellten Heizleistung bei unterschiedlichen Geschirren bzw. -Kochgütern ein völlig unterschiedliches Resultat des Kochvorganges erzielt werden. So kann beispielsweise ein Kochgut mit kleiner Wärmeleitfähigkeit bei einer eingestellten Heizleistung bereits anbrennen, somit an der Bodenpartie des Kochgeschirrs thermisch isolierend wirken, was den Anbrennprozess noch weiter erhöht; während ein anderes Kochgut mit guter Wärmeleitfähigkeit bei der gleichen eingestellten Heizleistung relativ gleichmässig über sein Volumen erwärmt wird. Diese Unsicherheit bezüglich des Kochgut-Temperaturzustandes wird dadurch eliminiert, dass man mindestens eine Temperatur an der Strecke zwischen Heizelement, inklusiv, und Kochgut, inkl., als Regelgrösse misst und die Heizleistungsstellung als Stellvorgang in einer Temperaturegelung einsetzt.

Dabei kann beispielsweise an zwei Stellen ausserhalb des Kochgeschirrs, an seiner Wandung gemessen werden, und die gemessene Temperaturdifferenz als Kriterium für den Temperaturzustand des Kochgutes als Regelgrösse eingesetzt werden.

Um nun an Orten, an welchen das Netz grossen Schwankungen unterworfen ist oder gar häufig unterbrochen wird, die Unsicherheit darüber, ob eine angesteuerte Heizleistung überhaupt erbracht wurde, zu eliminieren, wird weiter vorgeschlagen, dass man einen Ausfall des elektrischen Netzes und/oder bereits ein Abfallen unter einen vorgegebenen Wert anzeigt.

Ist eine Regelung vorgesehen, so wird dadurch, dass man die Schrittantwort auf einen SOLL-Wertschritt mindestens einer von einer Kochgut-SOLL-Temperatur abhängigen Führungsgrösse optimiert, eine optimale Ankoch- bzw. Anstossautomatik erreicht.

Die Erfindung wird nun anschliessend beispielsweise anhand von Figuren erläutert.

Es zeigen:

Fig. 2 eine prinzipielle Darstellung eines Leistungs-Stellverfahrens,

Fig. 3 prinzipiell eine mögliche Ausführungsvariante der Anordnung gemäss Fig. 2,

Fig. 4 eine Darstellung für die erfindungsgemässe Vorgehensweise,

Fig. 5 schematisch eine Steueranordnung zur Ausführung der Steuerung, wie sie anhand von Fig. 4 dargestellt ist,

Fig. 6 schematisch eine Ausführungsvariante der Steuerung, wie sie prinzipiell in Fig. 5 dargestellt ist, mit weiteren Optionen, unter Einsatz eines Rechners, wie eines Mikroprozessors bzw. Mikrocomputers.

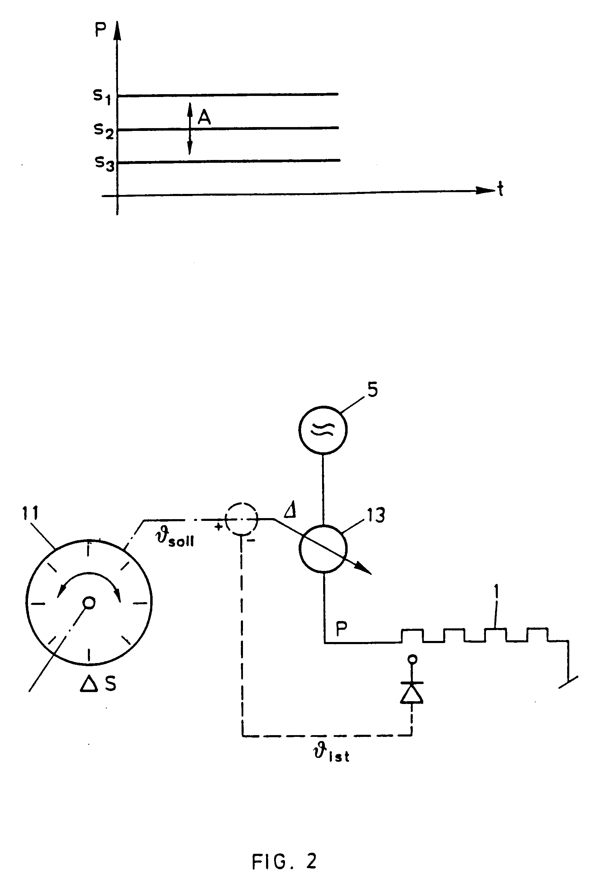

Gemäss Fig. 2 wird mittels der Einstellknopfes 11 die vom Netz 5 an das Heizelement 1 übertragene Leistung P in Funktion der am Einstellknopf 11 eingestellten Position angesteuert. Zwischen dem Netz 5 und dem Heizelement 1 ist eine Leistungseinstelleinheit 13 vorgesehen, die, je nach Feinheit der am Einstellknopf 11 einstellbaren Leistungswerte, kontinuierlich oder in Stufen die Leistung P am Heizelement 1 steuert. Gestrichelt ist angedeutet, dass im Bereich des Heizelementes/Kochgeschirrs (nicht dargestellt) ein Thermofühler 15 vorgesehen sein kann, dessen Ausgangssignal als Temperatur-IST-Wert einer Vergleichseinheit 17 zugeführt wird, an die ein mittels des Einstellknopfes 11 einstellbarer Temperatur-SOLL-Wert $\vartheta_{SOLL}$ zugeführt wird, so dass die Leistungs-Einstelleinheit 13 nach Massgabe einer Temperaturregeldifferenz $\Delta$, als Stellglied wirkend, die Temperatur $\vartheta_{IST}$ auf die Temperatur $\vartheta_{SOLL}$ regelt.

Wie oben in Fig. 2 dargestellt, wird in Stufen, entsprechend den Einstellungen s am Einstellknopf 11 die Leistung P, die dem Heizelement 1 zugeführt wird, eingestellt, oder, wie mit Pfeil A angedeutet, kontinuierlich einstellbar.

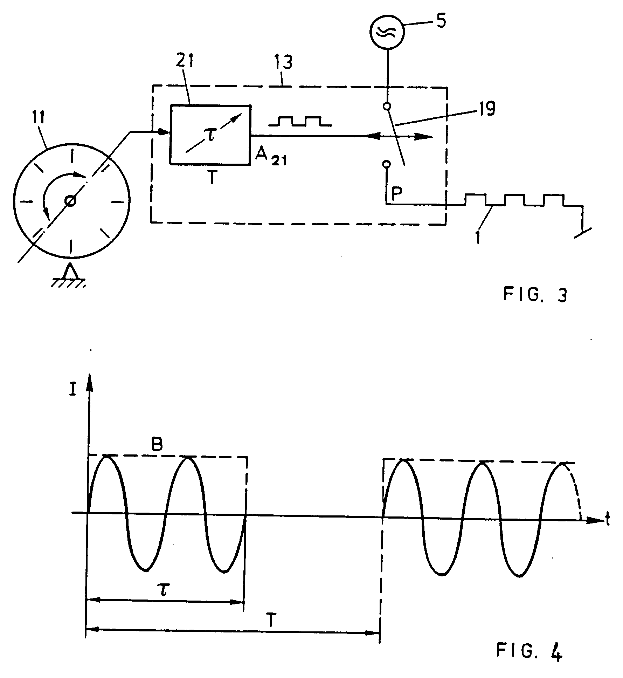

In Fig. 3 ist prinzipiell ein Vorgehen zur Einstellung der momentanen Leistung dargestellt. Danach umfasst die Leistungs-Einstelleinheit 13 einen elektronischen Schalter 19, wie einen Leistungs-Halbleiter, der vom Ausgang $A_{21}$ einer Zeitgebereinheit 21 angesteuert wird. Ein am Ausgang $A_{21}$ der Zeitgebereinheit 21 erscheinender Impulszug steuert dabei grundsätzlich das Verhältnis zwischen Zeiten, in welchen der Schalter 19 geschlossen ist, und Zeiten, in welchen der Schalter 19 geöffnet ist, an. Das Verhältnis dieser Zeiten bzw. deren Aenderung, ergibt die erwünschte Einstellung der dem Heizelement 1 zugeführten Leistung P.

In Fig. 3 ist mit T die Impuls-Repetitionsperiode des am Ausgang $A_{21}$ erscheinenden Impulszuges dargestellt mit der Variablen $\tau$, die Impulsbreite jedes den Schalter 19 schliessenden Impulses. Dabei wird das Verhältnis

$$\frac{\tau}{T - \tau}$$

nach Massgabe der Einstellung des Knopfes 11 verändert.

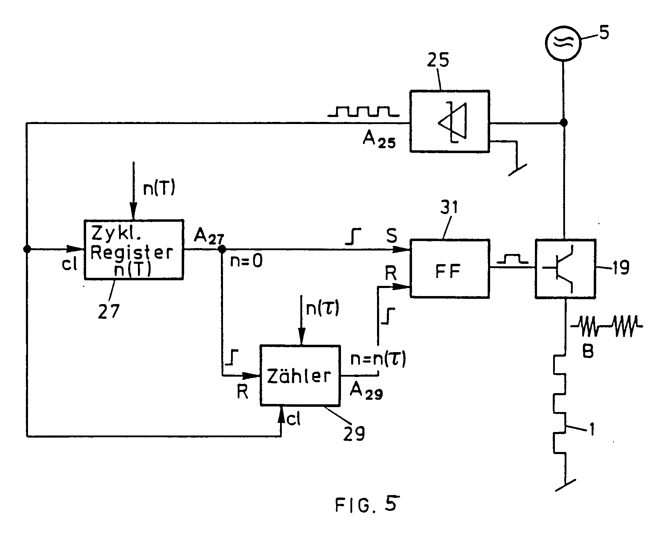

In Fig. 4 ist mit Bezug auf die bereits beschriebene Fig. 3 dar erfindungsgemässe Vorgehen dargestellt. Mit der variablen Zeitspanne $\tau$ gemäss Fig. 3 wird die Breite eines Wechselsignalpaketes B verändert. Während dieser Zeitspanne $\tau$ wird das Wechselsignal vom Netz 5 auf das Heizelement 1 durchgeschaltet. Danach wird der Schalter 19 gemäss Fig. 3 geöffnet, während einer Zeitspanne T-$\tau$, wobei T, wie in Fig. 4 dargestellt ist, die Paketrepetitionsperiode darstellt. Durch Einstellung des Verhältnisses $\tau$ zu T-$\tau$ wird die quasi momentane Leistung, die dem Heizelement 1 zugeführt wird, eingestellt, praktisch kontinuierlich, indem die Paketbreite B in ganzen Halbperioden verändert werden kann. Bevorzugterweise wird jedes Paket B bei einem Nulldurchgang des Stromes gestartet und endet wiederum bei einem Nulldurchgang des Stromes. Damit werden die entstehenden Störungen minimalisiert.

Es wird klar, dass bei erfindungsgemässen Vorgehen praktisch die Momentan-Leistung verstellbar wird.

Eine Realisationsvariante der anhand von Fig. 4 prinzipiell dargestellten Steuerung ist in Fig. 5 gezeigt. Die Spannung des Netzes 5 wird nebst dem elektronischen Schalter 19, welcher mit seinem gesteuerten Pfad das Netz 5 auf das Heizelement 1 schaltet, einem Impulsformer 25 zugeschaltet, grundsätzlich in der Funktion eines Komparators bzw. Null-Durchgangsdetektors, der das ihm zugeführte Wechselsignal in einen gleichfrequenten Impulszug an seinem Ausgang $A_{25}$ wandelt. Ein zyklisch betriebenes Register 27 wird durch den Impulszug am Ausgang $A_{25}$ getaktet. Seine Zykluslänge n(T) wird extern eingegeben, so dass das Register 27 von Null beginnend, bis zum Wert n(T) aufinkrementiert, rückgesetzt wird auf Null und wiederum aufinkrementiert. Die eingegebene Zykluslänge n(T) entspricht der anhand von Fig. 3 erläuterten Zeitspanne T.

Der Ausgang $A_{25}$ wird im weiteren dem Takteingang eines Zählers 29 zugeführt. Der Zähler 29 wird durch den Ausgang $A_{27}$ des zyklischen Registers 27 dann auf Null gesetzt, wenn am Register 27 der Wert n = O erscheint. Der Ausgang $A_{29}$ des Zählers 29 wird dann aktiviert, wenn er eine Anzahl der Impulse vom Ausgang $A_{25}$ gezählt hat, die einem extern eingegebenen Wert $n(\tau)$ entspricht. Durch den Ausgang $A_{27}$ des zyklischen Registers 27 wird ein bistabiles Element, wie ein Flip-Flop 31, gesetzt, durch den Ausgang $A_{29}$ des Zählers 29 rückgesetzt. In der Zeitspanne, in welcher das Flip-Flop 31 gesetzt ist, wird der Halbleiterschalter 19 leitend gesteuert, so dass dem Heizelement 1 die anhand von Fig. 4 dargestellten Pakete B zugeschaltet werden.

Bei Beginn der Zeitspanne T wird das Flip-Flop 31 gesetzt, zugleich der Zähler 29 rückgesetzt und beginnt nun während der Zeit $\tau$ die ihm vom Ausgang $A_{25}$ zugeführten Impulse zu zählen. Während dieser Zeit ist der Schalter 19 leitend geschaltet und ein Paket B wird dem Heizelement 1 zugeführt. Nach Verstreichen der Zeit $\tau$, entsprechend einer vorgegebenen Impulszahl am Ausgang $A_{25}$ wird das Flip-Flop 31 rückgesetzt, der Schalter 19 sperrend geschaltet. Erst wenn der Zyklus des Registers 27 abgelaufen ist, entsprechend der Zeit T, wird der Schalter 19 wieder leitend geschaltet, während der am Zähler 29 eingegebenen Zeitspanne $\tau$.

Es versteht sich nun von selbst, dass die anhand von Fig. 5 prinzipiell dargestellte digitale Technik sich ausgezeichnet für den Einsatz eines Rechners, d.h. eines Mikroprozessors, eignet. Dadurch werden aber zusätzliche Möglichkeiten für die Steuerung eröffnet.

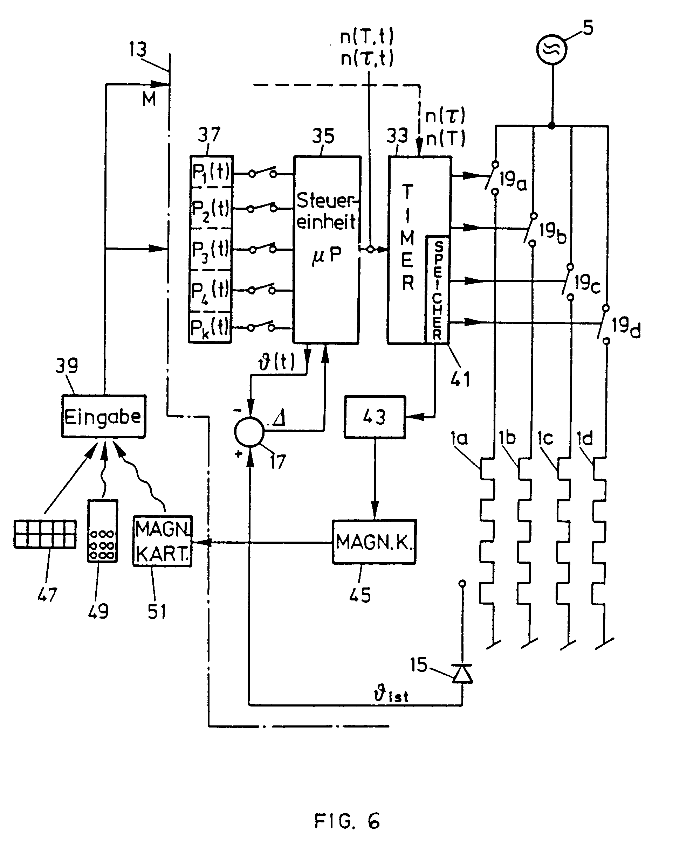

Die wesentlichsten seien anhand von Fig. 6 erläutert. Das Netz 5 wird über entsprechende elektronische Schalter $19_a$ bis $19_d$ auf beispielsweise vier dargestellte Heizelemente entsprechend vier Kochherdplatten 1a bis 1d geschaltet. Die Schalter 19 werden durch eine Zeitgebereinheit 33 angesteuert, für jeden Schalter 19 beispielsweise ausgebildet, wie anhand von Fig. 5 dargestellt wurde. Die anhand von Fig. 5 dargestellt eingegebenen Werte, entsprechend T bzw. $\tau$, werden der Zeitgebereinheit 33 von einer Steuereinheit 35, basierend auf einem Mikroprozessor zugespiesen, und zwar in Funktion der Zeit T. Damit steuert die Steuereinheit 35 die Leistungszufuhr an die Heizelemente 1, nach noch zu beschreibenden Kriterien, in Funktion der Zeit.

In einem Programmspeicher 37 sind mehrere Programme $P_1$, $P_2$ ... gespeichert. Sie entsprechen den an den Heizelementen 1 anzusteuernden Leistungszeitkurve, z.B. bei unterschiedlichen Kochgeschirren, und/oder Kochgütern und legen je fest, wie die Steuereinheit 35 die Zeitgebereinheit 33 in Funktion der Zeit ansteuern soll. Die Anwahl, welches der Programme $P_1$ ... $P_k$ bzw. Steuerdaten-Sequenzen zur Steuerung aktiviert werden soll, erfolgt über eine Eingabe 39. Falls der Anwender nicht eines der abgespeicherten Zeitsteuerprogramme $P_1$ ... $P_k$ verwenden will, gibt er über die Eingabe 39, wie mit dem Signalpfad M angedeutet, die anzusteuernden Leistungswerte für die Heizelemente 1, entsprechend $n(\tau)$ bzw. n(T) entsprechend Fig. 5, der Zeitgebereinheit 33 direkt ein.

An der Zeitgebereinheit 33 ist dabei ein Zwischenspeicher 41 vorgesehen, in welchem ab Beginn eines Kochvorganges bis zu seinem Ende die vollzogene Leistungssteuerung heizelementspezifisch in Funktion der Zeit abgespeichert wird. Hat nun der Anwender durch manuelle Betätigung entsprechend dem Signalpfad M, einen Kochvorgang abgeschlossen, der ihn befriedigt, so lädt er die abgespeicherte Leistungs/Zeit-Charakteristik in einen weiteren Programmspeicher 43, der Teil des Programmspeichers 37 sein kann, oder dessen Inhalt auf ein Speichermedium, wie eine Magnetkarte 45, ausgegeben werden kann. Auch hier kann mit dem Thermofühler 15 im Bereich des Heizelementes/Kochgeschirrs die dortige IST-Temperatur gemessen werden. Diese IST-Temperatur wird im Sinne einer Regelung der Vergleichereinheit 17 zugeführt. Der Temperatur-SOLL-Wert wird an der Steuereinheit 35 ermittelt, entsprechend dem im Speicher 37 aktivierten Programm. Die Differenz zwischen momentaner SOLL- und momentaner IST-Temperatur wirkt im regelnden Sinne auf die Steuereinheit 35, die Zeitgebereinheit 33 und damit die Leistungsstellung über die Schalter 19.

Bei der Eingabe 39 handelt es sich beispielsweise um ein Tastenfeld 47, wie mit Folientasten und/oder, um eine Fernsteuereingabe 49, wie auf Ultraschall- oder Infrarotbasis und/oder um eine Magnetkarten-Eingabevorrichtung 51 zum Eingeben und Lesen von Magnetkarten 45. Selbstverständlich können verschiedene Digitalanzeigen vorgesehen sein, über die momentanen Temperaturen, die aktivierten Programme etc. und insbesondere auch Anzeigen, die signalisieren, ob das Netz 5 allenfalls ausgefallen ist oder unter einen vorgegebenen Spannungswert gesunken ist. Die dargestellte Steuerung ermöglicht eine lokale Trennung der einzelnen Systemkomponenten. So kann ein Tastenfeld 47 für die manuelle Ansteuerung und Codierung der Steuerung, entfernt vom Kochherd, beispielsweise flach an einer Wand montiert werden, für Kinder nur schwer zugänglich. Bei dem bekannterweise geringen Platzbedarf für derartige µP-Steuerungen lässt sich dabei auf einem brettartigen Gebilde mit dem Tastenfeld 47 die ganze Steuerung entfernt vom eigentlichen Kochherd an einer Wand montieren und beispielsweise nur die elektronischen Leistungsschalter lokal den Heizelementen 1 zuordnen. Es brauchen dann nur die Steuerleitungen zur Ansteuerung dieser Schalter 19 vom lokal entfernten Steuerungs-Panel dem eigentlichen Kochherd zugeführt werden, der nun auch auf das Volumen der Speisung und der Heizelemente reduziert wird.

Wie in Fig. 6 ohne weiteres ersichtlich, wird es auch möglich, den Betrieb der einzelnen Heizelemente 1 zu koppeln, d.h. beispielsweise die Elemente 1a und 1b synchron anzusteuern. Die Steuereinheit 35 erlaubt auch ohne weiteres einen Vergleich je für Heizelemente 1 momentan aktivierter Programme $P_1$ ... $P_k$ aus dem Programmspeicher 37 bzw. von einer Magnetkarte 45, um die Heizelemente durch entsprechende Zeitstaffelung der Programmausführung so anzusteuern, dass die gewählten Programme, beispielsweise gleichzeitig beendet sind, somit Kochgüter auf verschiedenen Heizelementen, beispielsweise gleichzeitig zum Servieren fertiggekocht sind.

Durch die grundsätzliche, quasi kontinuierliche Einstellbarkeit der den Heizelementen 1 zugeführten Heizleistung werden alle die genannten Möglichkeiten durch µP- bzw. µC-Einsatz ohne weiteres möglich und es erschliessen sich dem Fachmann eine Vielzahl weiterer rechnergestützter Möglichkeiten.

Dank der Möglichkeit, die dem Heizelement zugeführte Leistung sehr fein einstellen zu können, durch Aenderung der Paketbreite um eine halbe Wechselspannungsperiode, ergibt sich die Möglichkeit, wesentlich mehr Einstellabstufungen vorzusehen, beispielsweise in Eingradstufen zwischen 1 und 100° mit einer Dezimalstelle. Hierzu wird die Einstellung nicht mehr an einem Drehknopf angezeigt, sondern mittels einer Digitalanzeige, wie einer Siebensegment-Anzeige. Dass eine derartige Anzeige helligkeitsreguliert ist, in Abhängigkeit des Umgebungslichtes, versteht sich von selbst.

Die anhand der Fig. 2 und 6 beschriebenen Thermofühler können im weiteren entlang der Wandung eines Kochgeschirrs vorgesehen werden, ein oder mehrere Fühler, womit eine relevante Messung des Kochgut-Temperaturzustandes für die Regelung erfolgt.

Derartige Temperaturfühler können dabei beispielsweise an einer Seitenwand einer Kochnische montiert werden und bei Bedarf, entsprechend mechanisch stabil ausgebildet, in den Bereich des Kochgeschirrs ausgeklappt werden.

Der Einsatz des Mikrocomputers ermöglicht im weiteren den momentanen Belastungszustand des Netzes zu überwachen, um selbsttätig Entscheidungen zu treffen, wie die vorgesehenen Heizelemente angesteuert werden sollen. Es kann dabei eine zeitliche Staffelung erfolgen, wann die einzelnen Heizelemente in Betrieb genommen werden, oder eine Staffelung der in der Zeit den einzelnen Heizelementen aufgeschalteten Momentanleistung, wie durch Staffelung der vorbeschriebenen Wechselspannungspakete.

Das Vorsehen eines Tastenfeldes mit Folienschaltern ergibt eine wesentlich bessere Bedienbarkeit, eine leichtere Reinigbarkeit. Da ein derartiges Tastenfeld, wie bereits beschrieben wurde, an einen beliebigen Ort, unabhängig vom eigentlichen Kochherd, angeordnet werden kann, ergibt sich die Möglichkeit, beispielsweise für Invalide, das Tastenfeld optimal zugänglich anzuordnen. Dadurch wird auch der bisher für Bedienungselemente verwendete Platz am Kochherd, z.B. für weitere Schubladen, frei. Im weiteren ermöglicht das Vorsehen eines Rechners auch den Einsatz eines Bildschirmes mit allen Möglichkeiten, die sich daraus ergeben, nämlich beispielsweise Einkaufslisten zu führen und abzurufen, Nahrungsmittellisten für entsprechende Rezepte abzuspeichern, Zusammenstellungen, welche Besucher welche Speisen bereits vorgesetzt erhielten, zu speichern, etc. Die Ausgabe von Kochprogrammen auf externen Datenträgern ermöglicht im weiteren ein höchst einfaches Austauschen von erprobten Rezepten.

**Patentansprüche**

1. Verfahren zum Stellen der Heizleistung an einem wechselstrombetriebenen Heizelement (1) eines Kochherdes, bei dem die Einstellung eines in Stufen stellbaren Einstellorganes (11) für die Heizleistung das Verhältnis steuert zwischen einer ersten Zeitspanne (T - $\tau$ ), während der der Wechselstrom vom Heizelement (1) abgetrennt ist, und einer zweiten, anschliessenden Zeitspanne ($\tau$), während der eine Anzahl Wechselstromhalbwellen (B) dem Heizelement zugeschaltet wird, dadurch gekennzeichnet, dass die Summe (T) aus erster Zeitspanne (T - $\tau$ ) und zweiter Zeitspanne ($\tau$) konstant gewählt wird und mit der Einstellung des Einstellorganes (11) die Länge der zweiten Zeitspanne ($\tau$) und damit die Anzahl (n) Halbwellen, die zugeschaltet werden, gesteuert wird.

2. Verfahren nach Anspruch 1, dadurch gekennzeichnet, dass die anschliessende Zeitspanne ($\tau$) bei einem Nulldurchgang des Stromes gestartet und beendet wird.

3. Verfahren nach einem der Ansprüche 1 oder 2, dadurch gekennzeichnet, dass das Einstellorgan (11) manuell und/oder nach einem Zeit-Steuer-Programm gestellt wird.

4. Verfahren nach einem der Ansprüche 1 bis 3, dadurch gekennzeichnet, dass die Heizleistung nach einem Programm in der Zeit verstellt wird, z.B. nach Massgabe eines kochgutspezifischen Programmes.

5. Verfahren nach Anspruch 4, dadurch gekennzeichnet, dass mittels eines Programmes bei Aufschalten der Heizleistung bei Beginn eines Kochvorganges eine Ueberleistung vorgegeben wird, um eine erwünschte Heizelementtemperatur möglichst rasch zu erreichen.

6. Verfahren nach einem der Ansprüche 3 oder 4, dadurch gekennzeichnet, dass man Programme mittels manueller Codeeingabe und/oder mittels Einlesen von Datenträgern an Ort oder mittels einer drahtlosen Uebermittlung eingibt.

7. Verfahren nach Anspruch 4, dadurch gekennzeichnet, dass man bei einem spezifischen Kochvorgang die Heizleistung mittels des Einstellorganes manuell in der Zeit verstellt und einen als optimal befundenen Leistungs/Zeit-Verlauf abspeichert, wie auf einen externen Datenträger, zur nachmaligen Benutzung als Programm.

8. Verfahren nach einem der Ansprüche 1 bis 7, dadurch gekennzeichnet, dass man die Heizleistungen von mindestens zwei Heizelementen in gegenseitiger Abhängigkeit stellt.

9. Verfahren nach Anspruch 8, dadurch gekennzeichnet, dass Kochplatten für ein grosses Kochgeschirr synchron angesteuert werden.

10. Verfahren nach einem der Ansprüche 1 bis 9, dadurch gekennzeichnet, dass man mindestens eine Temperatur an der Strecke zwischen Heizelement, inklusiv, und Kochgut, inklusiv, als Regelgrösse misst und die Heizleistungsstellung als Stellvorgang in einer Temperaturregelung einsetzt.

11. Verfahren nach einem der Ansprüche 1 bis 10, dadurch gekennzeichnet, dass man einen Ausfall und/oder das Abfallen des elektrischen Netzes unter einen vorgegebenen Schwellwert anzeigt.

12. Verfahren nach einem der Ansprüche 1 bis 11, dadurch gekennzeichnet, dass man bei Beginn eines Kochvorganges die Zeitspanne, die zum Erreichen einer erwünschten Temperatur am Kochgut nötig ist, durch Anlegen einer Ueberleistung optimiert.

13. Verfahren nach Anspruch 10, dadurch gekennzeichnet, dass man die Schrittantwort der Regelung auf einen SOLL-Wert-Schritt mindestens einer von einer Kochgut-SOLL-Temperatur abhängigen Führungsgrösse optimiert.

14. Verfahren nach einem der Ansprüche 1 bis 13, dadurch gekennzeichnet, dass man bei Stellen der Heizleistung an mehr als einem Heizelement diese selbsttätig, unter Vermeidung von Lastspitzen für das Netz, vornimmt.

15. Verfahren nach Anspruch 10, dadurch gekennzeichnet, dass man an einem Kochgeschirr an mindestens zwei Stellen eine Temperaturmessung vornimmt und die Differenz als Regelgrösse einsetzt.

16. Steuerung für die Heizleistung eines wechselstrombetriebenen Heizelementes (1) an einem Kochherd mit einem in Stufen verstellbaren Einstellorgan (11) für die Heizleistung, einem dem Heizelement vorgeschalteten elektronischen Leistungsschalter (19, 23) sowie einer Zeitsteuereinheit (27, 29), welche ausgangsseitig den Leistungsschalter (19) ansteuert und, in Funktion der Einstellung des Einstellorganes (11), Wechselstromhalbwellen (B) in den einen Zeitabschnitten ($\tau$) dem Heizelement aufschaltet, in anderen (T - $\tau$) den Wechselstrom vom Heizelement abtrennt und das Verhältnis dieser Zeitspannen steuert, dadurch gekennzeichnet, dass in Funktion der Einstellung des Einstellorganes (11) die Zeitsteuereinheit (13, 27, 29) die einen Zeitabschnitte ($\tau$) und damit die Anzahl ($n(\tau)$) aufgeschalteter Halbwellen variiert, dabei die Summe (T) jeweils der einen und der anderen Zeitspannen konstant hält.

17. Steuerung nach Anspruch 16, dadurch gekennzeichnet, dass die Zeitsteuereinheit (13) einen Impulsgenerator (27; 29; 31) mit Pulsbreiten-Verhältnis-Verstellung (29) umfasst, deren Ausgang den Leistungsschalter ansteuert.

18. Steuerung nach Anspruch 16, dadurch gekennzeichnet, dass der Generator (27; 29; 31) einen Impulszug mit Impulsbreiten, die einem ganzzahligen Vielfachen einer Netzhalbperiode entsprechen, abgibt und vorzugsweise mit zu Nulldurchgängen der Netz-Wechselspannung oder des Netz-Wechselstromes synchronen Schaltflanken.

**19.** Steuerung nach einem der Ansprüche 16 bis 18, dadurch gekennzeichnet, dass die Zeitsteuereinheit (13) einen Rechner umfasst, wie mindestens einen Mikrocomputer.

**20.** Steuerung nach Anspruch 19, dadurch gekennzeichnet, dass die Zeitsteuereinheit (13) einen Programmspeicher umfasst, worin zeitliche Abläufe der anzusteuernden momentanen Leistung abgespeichert sind.

**21.** Steuerung nach einem der Ansprüche 19 oder 20, dadurch gekennzeichnet, dass an der Zeitsteuereinheit (13) ein Programmspeicher (43) vorgesehen ist, als Lese/Schreibe-Speicher ausgebildet, zur Abspeicherung einer durchgeführten Leistungssteuerung über der Zeit und nachmaliger Wiederholung.

**22.** Steuerung nach Anspruch 21, dadurch gekennzeichnet, dass eine Ausgabeanordnung vorgesehen ist, um den Inhalt des Programmspeichers (43) auf einen externen Datenträger, wie eine Magnetkarte (45) auszugeben.

**23.** Steuerung nach einem der Ansprüche 19 bis 22, dadurch gekennzeichnet, dass eine Eingabeanordnung vorgesehen ist, mit einem Eingabetastenfeld (47) und/oder einer Leseeinrichtung für ein externes Speichermedium, wie Magnetkarten (51), und/oder mit einer drahtlosen Fernbedienungseinrichtung (49).

**24.** Steuerung nach einem der Ansprüche 16 bis 23, dadurch gekennzeichnet, dass eine Eingabeanordnung (39) und mindestens Teile der Zeitsteuereinheit (13) von einem Kochherd mit dem Heizelement entfernt montierbar sind.

**25.** Steuerung nach einem der Ansprüche 16 bis 24, dadurch gekennzeichnet, dass mindestens ein Thermofühler (15) im Bereich Kochgut/Kochgeschirr/Heizelement vorgesehen ist und dass der Zeitsteuereinheit (13) eine Vergleichseinheit (17) zugeordnet ist, der einerseits mindestens ein SOLL-Wert-Temperaturgrössen-Signal und anderseits mindestens das Ausgangssignal des Temperaturfühlers (15) zugeführt ist, und dass der Ausgang der Vergleichseinheit (17) mit einer Regeldifferenz auf mindestens ein Stellglied (35; 33) an der Zeitsteuereinheit (13) wirkt, zur Regelung der mit dem Fühler (15) erfassten Temperaturgrösse auf eine SOLL-Temperaturgrösse, wie eine Temperatur oder Temperaturdifferenz.

**26.** Steuerung nach einem der Ansprüche 16 bis 25, dadurch gekennzeichnet, dass die Zeitsteuereinheit (13) eine Leistungsabstufung von 0 bis 100% mindestens in 0,1% Schritten ansteuert.

**Claims**

**1.** Process for regulating the heating power of an A.C. driven heating element (1) of a cooker, on which the setting of a step-adjustable setting means (11) for the heating power controls the ratio between a first time period $(T - \tau)$, during which the alternating current is disconnected from the heating element (1), and a second consecutive time period $(\tau)$, during which a number of A.C. semi-waves (B) are connected to the heating element, characterised in that the sum (T) of the first time period $(T - \tau)$ and the second time period $(\tau)$ is chosen to be constant and the setting of the setting means (11) is used to control the second time period $(\tau)$ and thus the number (n) of semi-waves, which are connected.

**2.** Process according to claim 1, characterised in that the consecutive time period $(\tau)$ starts and ends when the current passing through is zero.

**3.** Process according to one of claims 1 or 2, characterised in that the setting means (11) is adjusted manually and/or according to a timing program.

**4.** Process according to one of claims 1 to 3, characterised in that the heating power is adjusted in time by means of a program, e.g. according to a cooking-material-specific program.

**5.** Process according to claim 4, characterised in that at the beginning of a cooking operation, when the heating power is connected, a power boost is introduced by means of a program in order to reach a desired heating element temperature as quickly as possible.

**6.** Process according to one of claims 3 or 4, characterised in that programs are entered by inputting a manual code and/or loading from local media or by means of a wireless transmission.

**7.** Process according to claim 4, characterised in that for a specific cooking operation the heating power is manually adjusted in time by means of the setting means and an optimal power/time progression is stored on e.g. an external medium for subsequent use as a program.

8. Process according to one of claims 1 to 7, characterised in that the heating power of at least two heating elements is regulated so as to be mutually dependant.

9. Process according to claim 8, characterised in that hot plates for a large cooking utensil are synchronously controlled.

10. Process according to one of claims 1 to 9, characterised in that at least one temperature is measured as a controlled variable along the path between and heating element and cooking material, including both heating element and cooking material, and in that the heating power setting is utilised as a regulating means in a temperature control.

11. Process according to one of claims 1 to 10, characterised in that failure of, and/or a drop in, the mains supply below a pre-set threshold value is indicated.

12. Process according to one of claims 1 to 11, characterised in that at the beginning of a cooking operation the time period required for reaching the desired temperature at the cooking material is optimised by applying a power boost.

13. Process according to claim 10, characterised in that the step response of the control to a set-value step of at least one reference input dependant upon a set temperature for the cooking material is optimised.

14. Process according to claim 1 to 13, characterised in that when regulating the heating power on more than one heating element, this is effected automatically, avoiding power surges in the mains supply.

15. Process according to claim 10, characterised in that the temperature on a cooking utensil is measured in at least two places with the difference used as a controlled variable.

16. Control arrangement for the heating power of an A.C. driven heating element (1) on a cooker comprising a step-adjustable setting means (11) for the heating power, an electronic power switch (19, 23) preceding the heating element and a timing unit (27, 29), which applies a voltage to the output side of the power switch (19), and, as a function of the setting of the setting means (11), connects alternating current semi-waves (B) to the heating element in the time periods ($\tau$), disconnects the alternating current from the heating element in others (T - $\tau$), and controls the ratio of these time periods, characterised in that the timing unit (13, 27, 29), as a function of the setting of the setting means (11), varies the time periods ($\tau$) and thus the number (n($\tau$)) of connected semi-waves, whilst keeping the sum (T) of the first and second time periods constant.

17. Control arrangement according claim 16, characterised in that the timing unit (13) comprises a pulse generator (27; 29; 31) with pulse-width ratio adjustment (29), the output of which controls the power switch.

18. Control arrangement according to claim 16, characterised in that the generator (27; 29; 31) emits a pulse train with pulse widths corresponding to an integer multiple of a mains supply half-period, preferably with switching slopes which are synchronous with zeros passes of the mains A.C. voltage or the mains A.C. current.

19. Control arrangement according to one of claims 16 to 18, characterised in that the timing unit (13) comprises a computer such as at least one micro-computer.

20. Control arrangement according to claim 19, characterised in that the timing unit (13) comprises a program memory in which time sequences of the transient power to be controlled are stored.

21. Control arrangement according to one of claims 19 or 20, characterised in that a program memory (43) is provided on the timing unit (13), which is designed as a read/write memory for storing an executed power control over time and subsequent repetition.

22. Control arrangement according to claim 21, characterised in that an output arrangement is provided for outputting the content of the program memory (43) to an external medium such as a magnetic card (45).

23. Control arrangement according to one of claims 19 to 22, characterised in that an input arrangement is provided comprising an input keypad (47) and/or a reading device for an external storage medium such as magnetic cards (51) and/or comprising a wireless remote control device (49).

24. Control arrangement according to one of claims 16 to 23, characterised in that an input arrangement (39) and at least parts of the timing unit (13) are mountable remotely from a cooker with the heating element.

25. Control arrangement according to one of claims 16 to 24, characterised in that at least one thermal sensor (15) is provided in the cooking material/cooking utensil/heating element area and in that a comparator (17) is assigned to the timing unit (13) for receiving at least one set-value temperature signal on the one hand and at least the output signal of the temperature sensor (15) on the other, and in that the output of the comparator (17), using a control difference, acts upon at least one final control element (35; 33) on the timing unit (13) for regulating the temperature value detected by the sensor (15) to correspond to a set temperature value, such as a temperature or temperature difference.

26. Control arrangement according to one of claims 16 to 25 characterised in that the timing unit (13) controls a power graduation from 0 to 100% in steps of at least 0.1%.

## Revendications

1. Procédé pour régler la puissance de chauffage d'un élément de chauffage à courant alternatif (1) d'une cuisinière, selon lequel le réglage d'un organe de réglage (11) réglable par paliers pour la puissance de chauffage commande le rapport entre une première plage de temps (T - τ) pendant laquelle le courant alternatif est interrompu vis-à-vis de l'élément de chauffage (1), et une seconde plage de temps suivante (τ) pendant laquelle un certain nombre de demi-ondes de courant alternatif (B) sont transmises à l'élément de chauffage, caractérisé en ce que la somme (T) de la première plage de temps (T - τ) et de la seconde plage de temps (τ) est choisie constante, et le réglage de l'organe de réglage (11) permet de commander la durée de la seconde plage de temps (τ) et, par conséquent, le nombre (n) de demi-ondes qui sont transmises.

2. Procédé selon la revendication 1, caractérisé en ce que la plage de temps suivante (τ) est commencée et terminée par un passage par zéro du courant.

3. Procédé selon l'une des revendications 1 et 2, caractérisé en ce que l'organe de réglage (11) est réglé manuellement et/ou suivant un programme de commande en fonction du temps.

4. Procédé selon l'une des revendications 1 à 3, caractérisé en ce que la puissance de chauffage est réglée dans le temps suivant un programme, par exemple conformément à un programme spécifique à une denrée à cuire.

5. Procédé selon la revendication 4, caractérisé en ce que, lors de la mise en marche de l'élément de chauffage, au début d'un processus de cuisson, une surpuissance est prédéfinie au moyen d'un programme pour atteindre le plus rapidement possible une température voulue de l'élément de chauffage.

6. Procédé selon l'une des revendications 3 et 4, caractérisé en ce que l'on introduit des programmes par une entrée de codes manuelle et/ou une lecture de supports de données sur place ou au moyen d'une transmission sans fil.

7. Procédé selon la revendication 4, caractérisé en ce que, lors d'un processus de cuisson spécifique, on règle manuellement dans le temps la puissance de chauffage à l'aide de l'organe de réglage et on mémorise, par exemple sur un support de données extérieur, une évolution puissance/temps en vue de s'en servir ultérieurement comme programme.

8. Procédé selon l'une des revendications 1 à 7, caractérisé en ce que l'on règle la puissance de chauffage d'au moins deux éléments de chauffage interdépendants.

9. Procédé selon la revendication 8, caractérisé en ce que des plaques de cuisson sont commandées d'une manière synchronisée pour une grosse marmite.

10. Procédé selon l'une des revendications 1 à 9, caractérisé en ce que l'on mesure comme grandeur de réglage au moins une température au niveau de la distance comprise entre l'élément de chauffage inclus et la denrée à cuire incluse, et l'on utilise le réglage de puissance de chauffage en tant que processus de réglage dans une régulation de température.

11. Procédé selon l'une des revendications 1 à 10, caractérisé en ce que l'on indique une défaillance et/ou la chute du réseau électrique au-dessous d'une valeur de seuil donnée.

12. Procédé selon l'une des revendications 1 à 11, caractérisé en ce qu'au début d'un processus de cuisson, on optimise, par l'application d'une surpuissance, la plage de temps nécessaire pour atteindre une température voulue au niveau de la denrée à cuire.

13. Procédé selon la revendication 10, caractérisé en ce que l'on optimise la réponse incrémentielle de la régulation sur un incrément de valeur de CONSIGNE d'au moins une grandeur de référence fonction d'une température de CONSIGNE de la denrée à cuire.

14. Procédé selon l'une des revendications 1 à 13, caractérisé en ce que, lors du réglage de la puissance de chauffage de plusieurs éléments de chauffage, on établit celle-ci automatiquement en évitant des pointes de charge pour le réseau.

15. Procédé selon la revendication 10, caractérisé en ce que, pour une marmite, on procède à une mesure de température au niveau de deux emplacements en utilisant la différence comme grandeur de réglage.

16. Dispositif de commande pour la puissance de chauffage d'un élément de chauffage à courant alternatif (1) d'une cuisinière, comportant un organe de réglage (11) réglable par paliers pour la puissance de chauffage, un commutateur de puissance électronique (19, 23) monté en amont de l'élément de chauffage, ainsi qu'une unité de commande de temps (27, 29) qui commande le commutateur de puissance (19), côté sortie, et qui, en fonction du réglage de l'organe de réglage (11), transmet à l'élément de chauffage des demi-ondes de courant alternatif (B) au cours de premières periodes de temps ($\tau$), interrompt le courant alternatif vis-à-vis de l'élément de chauffage au cours de secondes périodes de temps (T - $\tau$) et commande le rapport de ces plages de temps, caractérisé en ce qu'en fonction du réglage de l'organe de réglage (11), l'unité de commande de temps (13, 27, 29) fait varier les premières periodes de temps ($\tau$) et, par conséquent, le nombre (n ($\tau$)) des demi-ondes transmises, pour ainsi maintenir constante la somme (T) des premières et secondes plages de temps respectives.

17. Dispositif de commande selon la revendication 16, caractérisé en ce que l'unité de commande de temps (13) comporte un générateur d'impulsions (27; 29; 31) pourvu d'un réglage de rapport de durées d'impulsions (29) dont la sortie commande le commutateur de puissance.

18. Dispositif de commande selon la revendication 16, caractérisé en ce que le générateur (27; 29; 31) délivre un train d'impulsions ayant des durées d'impulsions correspondant à un multiple entier d'une demi-période de réseau et, de préférence, des flancs de commutation synchrones pour les passages par zéro de la tension alternative du réseau ou du courant alternatif du réseau.

19. Dispositif de commande selon l'une des revendications 16 à 18, caractérisé en ce que l'unité de commande de temps (13) comporte un ordinateur, comme par exemple au moins un micro-ordinateur.

20. Dispositif de commande selon la revendication 19, caractérisé en ce que l'unité de commande de temps (13) comporte une mémoire de programmes dans laquelle sont stockés des allures temporaires de la puissance momentanée.

21. Dispositif de commande selon l'une des revendications 19 et 20, caractérisé en ce qu'au niveau de l'unité de commande de temps (13), il est prévu une mémoire de programmes (43) qui se présente sous la forme d'une mémoire à lecture/écriture, pour stocker une commande de puissance exécutée dans le temps et la répéter ultérieurement.

22. Dispositif de commande selon la revendication 21, caractérisé en ce qu'il est prévu un dispositif de sortie pour sortir le contenu de la mémoire de programmes (43) sur un support de données extérieur, tel qu'une carte magnétique (45).

23. Dispositif de commande selon l'une des revendications 19 à 22, caractérisé en ce qu'il est prévu un dispositif d'entrée comportant un clavier d'entrée (47) et/ou un dispositif de lecture pour un support de mémoire extérieur, comme des cartes magnétiques (51), et/ou un dispositif de commande à distance sans fil (49).

24. Dispositif de commande selon l'une des revendications 16 à 23, caractérisé en ce qu'un dispositif d'entrée (39) et au moins des parties de l'unité de commande de temps (13) sont montés à distance d'une cuisinière comportant l'élément de chauffage.

25. Dispositif de commande selon l'une des revendications 16 à 24, caractérisé en ce qu'il est prévu au moins un détecteur de température (15) dans la zone denrée à cuire/marmite/élément de chauffage, en ce que l'unité de commande de temps (13) comporte une unité de comparaison (17) qui reçoit, d'une part, au moins un signal de valeur de température de CONSIGNE et, d'autre part, au moins le signal de sortie du détecteur de température (15), et en ce que la sortie de l'unité de comparaison (17) agit par une différence de réglage sur au moins un organe de réglage (35; 33) au niveau de l'unité de commande de temps (13) pour régler la valeur de température détectée par le détecteur (15) sur une valeur de température de CONSIGNE, telle qu'une température ou une différence de température.

26. Dispositif de commande selon l'une des revendications 16 à 25, caractérisé en ce que l'unité de commande de temps (13) commande une gradation de puissance de 0 à 100% au moins par incréments de 0,1%.

FIG. 1

FIG. 2

FIG. 3

FIG. 4

FIG. 5

FIG. 6